(19) Europäisches Patentamt
European Patent Office
Office européen des brevets

(11) **EP 2 534 451 B1**

(12) **EUROPEAN PATENT SPECIFICATION**

(45) Date of publication and mention
of the grant of the patent:
**02.11.2016 Bulletin 2016/44**

(21) Application number: **10712802.7**

(22) Date of filing: **10.02.2010**

(51) Int Cl.:
***G01D 5/249*** *(2006.01)*

(86) International application number:
**PCT/IT2010/000047**

(87) International publication number:
**WO 2011/099041 (18.08.2011 Gazette 2011/33)**

(54) **DEVICE FOR ANGULAR MEASURES EQUIPPED WITH ROTARY MEMBER**

WINKELMESSVORRICHTUNG MIT ROTIERENDEM ELEMENT

DISPOSITIF DE MESURE D'ANGLE AVEC UN ORGANE EN ROTATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**19.12.2012 Bulletin 2012/51**

(73) Proprietor: **Istituto Nazionale di Ricerca
Metrologica
(I.N.RI.M.)
10135 Torino (IT)**

(72) Inventor: **PISANI, Marco
I-10135 Torino (IT)**

(74) Representative: **Garavelli, Paolo
A.BRE.MAR. S.R.L.
Consulenza in Proprietà Industriale
Via Servais 27
10146 Torino (IT)**

(56) References cited:
**FR-A1- 2 897 944    GB-A- 1 453 728**

## Description

The present invention refers to a device for angular measures equipped with rotary member.

As known, in order to measure the rotation of a shaft, or in general of a rotary part of a machine, devices called angular encoders are used. Data output by an encoder are therefore a rotation angle measured starting from a given starting position: from this, the angular speed can also be obtained. A known encoder substantially consists in two main parts: a first fixed part, integral with a reference structure (for example the machine basement) and a second moving part secured to a rotary machine part (for example the arm of a robot or the shaft of an engine). The moving part carries a disk or a drum on which some reference "signs" are imprinted. In the most common case, the signs are regularly arranged along the disk circumference, and some sensors arranged in the fixed part "see" such signs on the disk and generate electric signals. When the machine rotates, the disk is rotated with respect to the sensors, and a number of signals proportional to the rotation angle is generated. These signals are finally counted and displayed by a suitable electronic system. In these last decades, many types of encoder have been created and used, mainly different one from the other due to the technology adopted for the reference/sensor system (inductive, capacitive, magnetic, optical type,...). In recent years, the most commonly used system for precision encoders is based on optical sensors: optical encoders are based on a disk, on which equally-spaced radial signs are imprinted, and on a sensor that measures the changes of reflectivity or transmittivity of the disk next to the signs. The simplest system is composed of a LED that lightens a sectored disk that alternatively blocks and lets light pass, and a detector placed on the opposite side that measures light intensity. This type of encoder is typically used in computer mouses.

In general, the angular resolution of an encoder is mainly determined by the number of signs present on the disk that define the angular value of the elementary count of the electronic system. For example, a precision encoder on whose disk there are 3600 signs has a basic resolution of 360°/3600=0.1° per count. By means of the electronic system, it is possible to divide the elementary signal into smaller parts, further increasing the resolution.

As regards the encoder "accuracy" (namely the maximum difference between the displayed value and the "true" rotation angle), this depends on three main factors:

> 1) the uniformity of the angular distance of the signs;
> 2) the concentricity of disk and encoder rotation axis; and
> 3) the uniformity of the division of the elementary sign into smaller parts performed at electronic level.

The first two factors generate a cyclic error with the periodicity of a complete revolution, the third factor generates a cyclic error with the periodicity of a single sign. Such errors cannot be determined a priori and generate a limit in the accuracy of all commercial encoders. By means of a calibration procedure through a comparison with a better instrument, it is possible to measure the errors, and consequently to correct them. In practice, it is very difficult to perform precision measures with a classical encoder, if this latter one is not calibrated. High quality production processes allow making encoders with rated uncertainties equal to a few arcoseconds (or thousandths of a degree, or millionths of a revolution), even if, in order to guarantee such accuracy level, a calibration is unavoidable.

A completely different technology deals with devices called "resolvers" or "synchros". Also these devices are composed of a stator and a rotor, respectively fastened to two parts of a machine. The rotor is generally equipped with an electric winding excited by an alternate current (AC) that generates an alternate magnetic field. Such magnetic field is detected by one or more sensors placed in the stator and the signals generated here are sent to the measuring electronics. Depending on the orientation related to stator and rotor windings, the phase between excitation AC current and sensor AC voltage, linearly changes with the angle. In general, two stator windings generate a sine and a cosine signal that can be easily used to measure the electric phase angle. In the simplest case, the rotor has a single pole (North-South) and the electric phase angle corresponds to the mechanical phase. Similarly to what is described in optical encoders, when better resolutions are required, a multi-pole rotor is used. In this case, a complete revolution of the electric phase corresponds to a mechanical rotation equal to 360°/N where N is the number of poles. The resolvers are suitable for use in hostile environments (high temperatures, dust, humidity, etc.) where an optical encoder could be damaged, for example in military or aerospace applications.

The above-described encoders (including multi-pole resolvers) are called incremental encoders since the generated signal is cyclic and repeats itself the same N times within a revolution. As a consequence, the signal provides only information about the rotation amount and not the absolute encoder position. In some cases, it is however important to know the absolute encoder position with respect to a certain reference system and in such case two methods are commonly used. The simplest of such method provides for the addition of a reference sign (read by an independent system of sensors) to the disk on which the signs at the same distance reside, such reference sign generating a single signal per every revolution: this method has the disadvantage that upon turning on, the absolute encoder position is unknown till the reference sign is encountered for the first time, and this makes an initialisation procedure necessary. A second method instead provides for the use of a more complex disk on which different sequences of signs are imprinted.

Every sequence of signs is read by a detector in order to generate a number of digital signals that compose a digital "word". With a suitable choice of the position of signs, every digital word univocally defines the absolute encoder position. These encoders are called "absolute" encoders.

In general, prior art encoders have the following features:

- they provide as output a single signal (plus a quadrature signal) proportional to the relative position between detector and reference signs;
- the provided signal is of the static (DC) type;
- the electronic measuring system is a simple counter of the signs included on the disk;
  and they suffer the following inconveniences:

  - the cyclic error due to a non-uniform division or a disk eccentricity cannot be detected without calibration;
  - the cyclic error due to pulse division cannot be detected without calibration.

Italian Patent Application n. CA2009A000002 and GB 1 453 728 A disclose a device for angular measures according to the Italian Patent Application n. CA2009A000002 and GB-A-1 453 728 disclose a device tor angular measures according to the preamble of claim 1.

Object of the present invention is solving the above prior art problems by providing a device for angular measures equipped with rotary member that allows reducing cyclic errors in performed measures.

Another object of the present invention is providing a device for angular measures equipped with rotary member that provides at least two signals as output.

Moreover, an object of the present invention is providing a device for angular measures equipped with rotary member in which the provided signal is of a 6 dynamic (AC) type.

Another object of the present invention is providing a device for angular measures equipped with rotary member in which the obtained electronic measuring system is a phase-meter (or time counter).

Moreover, an object of the present invention is providing a device for angular measures equipped with rotary member that does not require calibration, since the cyclic error due to a non-uniform division or to an eccentricity of the rotary member is reset upon every complete revolution of the member itself, and the cyclic error due to the pulse division is virtually removed by using time interval measures by self-correlation.

The above and other objects and advantages of the invention, as will appear from the following description, are obtained with a device for angular measures equipped with rotary member as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

- Figure 1 shows a schematic side view of a preferred embodiment of the device according to the present invention;
- Figure 2 shows a schematic side view of another preferred embodiment of the device according to the present invention;
- Figure 3 shows a diagram related to the operation of the device according to the present invention; and
- Figure 4 shows a plan view of a preferred embodiment of a component of the device according to the present invention.

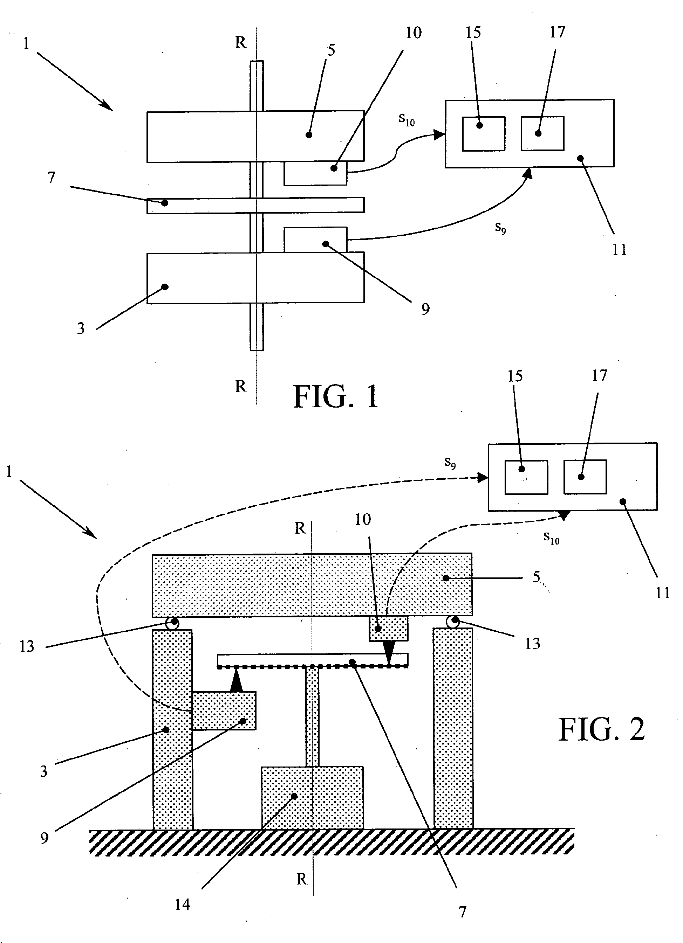

With reference to Figure 1, it is possible to note that the device for angular measures 1 according to the present invention is composed of a first part 3 and a second part 5, each one of such parts 3, 5 being able to rotate relatively with respect to the other part around a rotation axis R-R, between such parts 3, 5 at least one rotary member 7 being interposed, placed in a continuous rotation around such axis R-R through actuating means, each one of such parts 3, 5 being equipped with at least one respective detecting means 9, 10 and such rotary member 7 being equipped with references adapted to be autonomously detected by each one of such detecting means 9, 10.

Obviously, each one of the parts 3, 5 is adapted to be fastened to a related moving component of an apparatus that needs the angle measure: for example, the first part 3 is fastened to the basement of a robot and the second part 5 is fastened to the arm of the robot itself whose rotation must be measured.

In particular, the references of the rotary member 7 are autonomously detected by each of the detecting means 9, 10 which, next to the passage of such references, are adapted to generate respective electronic signals $s_9$, $s_{10}$ mentioned below: therefore, differently from the classical encoder in which the single detecting means provide only one signal proportional to the relative position between detector and reference signs, in the device 1 according to the present invention the rotary member 7 rotates, preferably in a constant way, around axis R-R so that each one of the detecting means 9, 10 differently and autonomously detects the relative sliding of the signs and generates a different alternate signal, whose frequency is proportional to the rotation speed of the rotary member 7 and the number of signs imprinted thereon.

The signals $s_9$, $s_{10}$, each one of which comes from the respective detecting means 9 or 10, are finally sent to control means 11 adapted to measure the phase (or the time interval) between them.

When the parts 3, 5 are not moving one with respect to the other, the two signals $s_9$, $s_{10}$ have the same frequency $f_9 = f_{10} = f_7 * M$ (where $f_7$ is the rotation frequency of the rotary member 7 and M is the number of references present on such member). The control means 11 therefore measure a constant phase difference between the two signals, that points out a constant angle between the parts 3 and 5. When instead, for example, the first part 3 is rotated (for easiness, a constant speed must be considered), the speed of the rotary member 7 with respect to its related detecting means 9 decreases or increases (for the first part 3 that rotates respectively along the same direction of the rotary member 7 or along an opposite direction): the detecting means 9 then generate a signal $s_9$ with frequency $f_9 = (f_7 \pm f_3) * M$ (where $f_3$ is the rotation frequency of the first part 3). The phase between $s_9$ and $s_{10}$ will increase (or decrease) proportionally to the rotation of the first part 3 with respect to the second part 5.

It is easy to note that the phase variation measured by the control means 11 is:

$$\Delta\varphi = 2\pi * M * \alpha/2\pi$$

where $\alpha$ is the angle by which the first part 3 is rotated with respect to the second part 5 expressed in radiants. This means that, for a complete revolution of the first part 3 with respect to its own axis ($\alpha = 2\pi$), the phase variation will be $2\pi * M$, namely M complete revolutions: in other words, the phase vector will perform a complete $2\pi$ cycle for every rotation of the first part 3 equal to 1/M of a complete revolution.

The phase measured by the control means 11 will finally be divided by M and will represent the rotation of the first part 3 expressed in radiants.

Merely as an example, the rotary member 7 can be made as at least one rotary disk on which the reference signs are imprinted, similarly to those usually used in classical encoders and the detecting means 9 can be prior art optical sensors. It must however be noted that in this case the maximum rotation speed is limited by the rotation speed of the disk 7: in fact, as stated above, the frequency of the signal $s_9$ is $f_9 = (f_7 \pm f_3) * M$ (where $f_3$ is the rotation frequency of the first part 3), therefore when the first part 3 rotates at the same speed of the disk 7 and along the same direction, the frequency of the signal $s_9$ is zeroed. This means that the rotation speed of the disk 7 limits the maximum speed of the device 1, at least along one direction. However, due to the use of more complex embodiments, for example by using more than one optical sensor, it is anyway possible to exceed this limit.

Obviously, the rotary member 7 and its related detecting means 9, 10 can be made according to any other technology known in the art. Merely as an example, in no case being exhaustive or limiting, it is possible to make the rotary member 7 and its related detecting means 9, 10 both through non-optical (for example magnetic, inductive, capacitive, etc.) solutions, and through optical solutions: in particular, optical solutions further provide reflection-type systems, in which the differences of disk reflectivity are exploited, given by the different optical properties of the signs and the disk substrate, and transmission-type systems in which the different disk transmissivities are exploited, given by the different optical properties of substrate and signs, these latter ones being also possibly substrate recesses.

By adopting non-optical magnetic solutions for making the device 1 according to the present invention, the rotary member 7 is a disk or drum, magnetised along its circumference, in which the references are represented by alternate magnetic poles and the detecting means 9, 10 are magnetic sensors (for example magnetoresistive or Hall-effect sensors) suitable to detect such poles: such embodiment of the device 1 is particularly suitable to be used in hostile environments.

By adopting instead optical solutions, it is possible to provide one of the following alternative and non-limiting modes for making the device 1 according to the present invention:

- the rotary member 7 is a glass disk in which the references are opaque signs printed or made as photographic emulsion to be used with detecting means 9, 10 such as transmission-type detectors;
- the rotary member 7 is a glass disk in which the references are metal signs (chrome, gold, etc.) to be used with detecting means 9, 10 such as transmission- or reflection-type detectors;
- the rotary member 7 is a metallic disk or drum in which the references are signs made of materials with different reflectivity to be used with detecting means 9, 10 such as reflection-type detectors;
- the rotary member 7 is a plastic or metallic disk in which the references are openings to be used with detecting means 9, 10 such as transmission-type detectors.

The detecting means 9, 10 made as transmission- or reflection-type detectors can make use of the so-called "Moirè" technique, in which a transmission grating is used with a similar pitch to the one of disk signs, so that the detector "sees" many signs simultaneously, consequently increasing the signal/noise ratio and becoming less sensible to local imperfections of the series of signs.

A more complex optical technique provides for the realisation of the rotary member 7 as an optical disk that exploits the interference between two laser beams diffracted by the grooves on the optical disk, that here operates as diffraction grating.

As regards the system for analysing the signals $s_9$, $s_{10}$ adopted by the control means 11, known techniques can be adopted, already used for phase and time (time delay) measures between two similar electric signals. Therefore, for every pair of signals $s_9$, $s_{10}$ obtained with the detecting means 9, 10 and the rotary member 7 made according to one of the possible above-described variations, it is possible to measure phase or time delay by using the control means 11 comprising substantially known electronic devices such as, for example, means for measuring the phase, means for measuring the time delay, self-correlation detecting means, etc.

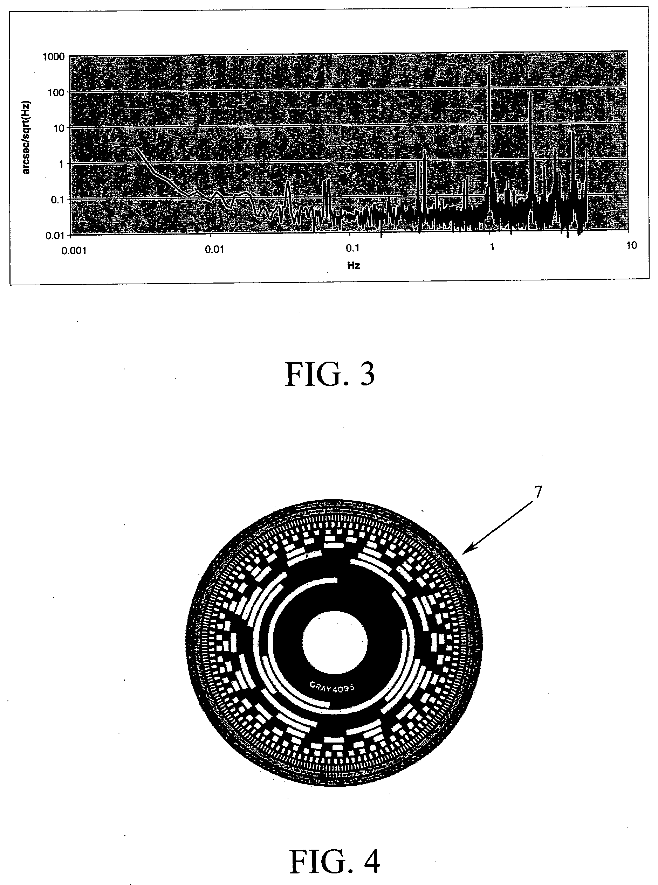

Advantageously, it is also possible to make a device 1 according to the present invention of an absolute type; in such case, the rotary member 7 is a disk in which the references are represented by an adequate plurality of signs imprinted on the disk and detected by an adequate plurality of detecting means through which it is possible to determine, without ambiguities, the angular position of the detecting means with respect to the disk: preferably, the rotary member 7 is a disk as shown in particular in Figure 4, in which the references are represented by twelve series of signs coded with "Gray" coding. A device 1 according to the present invention equipped with a similar disk read by two similar series of detecting means is then able to provide an absolute information about the relative angle between the first part 3 and the second part 5 though keeping the above properties and its advantages with respect to prior art encoders.

With reference to Figure 2, a prototype of the device 1 according to the present invention is schematically shown, such prototype having been made by the Applicant in order to perform the below experimental tests.

In such prototype embodiment, the rotary member 7 is a glass disk associated with detecting means 9, 10 of the reflection/moiré type. References are made as 5000 black signs imprinted on one disk side on a photosensitive emulsion through a photographic process. The disk is rotated through actuating means made as a motor 14 of the "microstep" type, that performs a complete revolution every 250.000 steps. The motor is controlled with a function generator that generates a clock at 250 kHz in such a way as to almost constantly rotate at an angular speed of 1 revolution/second. The second part 5 rotates with respect to the first part 3 by interposing at least one ball bearing 13 coaxially with the rotation axis R-R of the disk 7. The detecting means 9, 10 are of the reflection type to exploit the slight difference of reflectivity between glass (about 4%) and black signs (almost 0%). The two signals $s_9$, $s_{10}$ produced by their respective detecting means 9, 10 with mean frequency of 5 kHz are amplified and sent and analysed by the control means comprising at least one 16-bit analogue/digital converter 15 and a suitable software 17 of the "labview" type: in particular, such software, that has been made for a heterodyne interferometer, performs the phase measuring and converts this measure into an angle measure. Figure 3 then shows a diagram related to the spectrum of the noise density of the phase signal expressed in arcseconds/√Hz obtained with the above-described prototype embodiment of the device 1 according to the present invention, by keeping the second part 5 unmoving with respect to the first part 3. In such a diagram, it is possible to note a peak at 1 Hz and its harmonics that represent oscillations in phase measures that have the same periodicity of the disk rotation due to the non-uniform distance between the signs and/or the imperfect centring between the disk rotation axis and the geometric origin of the signs. This error is on the order of tenths of second and consistent with the quality of the device 1. For frequencies lower that 1 Hz, phase fluctuations are much lower, demonstrating the advantageous averaging effect of cyclic errors characterising the device 1 according to the present invention. The last noise (lower than 0.1 arcseconds/√Hz) complies with the signal/noise ratio of the two signals $s_9$, $s_{10}$ and with the analogue/digital converter resolution. Such high resolution shown by the device 1 according to the present invention can be detected only with very costly high precision encoders. For frequencies lower than 0.1 Hz, the noise increases due to long-term thermal movements of the mechanical structure of the device 1.

From what has been described above, it is therefore clear that the device 1 according to the present invention advantageously allows greatly reducing cyclic errors: in fact, starting to considerate errors due to a non-uniform spacing of the references or to a lack of coincidence between the centre of the references and the rotation axis R-R of the rotary member 7 (eccentricity), it can be noted that, when the rotary member 7, made for example as a disk, rotates, both errors have the effect of inducing an apparent modulation of the disk speed, namely the frequency of signals increases and decreases during the complete disk revolution, generating a periodic phase oscillation (the amount of this error is what, in a prior art encoder, cannot be removed without a calibration procedure). Due to the known properties of a circle, it is easy to see that the error averaged on a complete cycle is zero, and therefore the phase measure, averaged on a complete disk rotation cycle, is free from errors. In other words, if the instantaneous phase measure can be affected by cyclic errors, the phase measure (and consequently also the angular measure), obtained every period $\tau_7 = 1/f_D$, is not affected by cyclic errors. As direct consequence, the device 1 according to the present invention allows, with respect to prior art encoders, obtaining highly improved performances with the same construction accuracy, or releasing the production requirements to obtain the same measuring accuracy.

As regards the error due to the division of elementary signals into smaller parts, this can be removed by exploiting the dynamic nature of the two signals $s_9$, $s_{10}$. In fact, if it is assumed that the disk rotation is constant, the time delay between the two signals $s_9$, $s_{10}$ can be measured, and the "length" of a single interval can be divided into small parts, only limited to the resolution of the control means 11. In order to better understand this principle, the limit case in which there is a single reference sign on a disk must be assumed: the two detecting means 9, 10 will only generate a signal per every complete disk revolution. If it is also assumed that signals $s_9$, $s_{10}$ are square waves free from noise and that the disk rotates at a constant speed, by measuring the time interval $\Delta t$ between the two signals, angle $\alpha = 2n * \Delta t/\tau_7$ included between the first part 3 and the second part 5, will be obtained. In case M>>1, this technique allows obtaining a division (without cyclic errors) of the elementary steps (2n/M) into small parts to increase its resolution.

**Claims**

1. Device (1) for angular measures composed of a first part (3) and a second part (5), each one of said parts (3, 5) being able to relatively rotate, one with respect to the other, around a rotation axis (R-R), between said parts (3, 5) at least one rotary member (7) being interposed, made continuously rotate around said axis (R-R) through actuating means (14), each one of said parts (3, 5) being equipped with at least one respective detecting means (9, 10) and said member (7) being equipped with references adapted to be autonomously detected by each one of said detecting means (9, 10), **characterised in that** said rotary member (7) is a disk in which said references are a plurality of signs detected by a plurality of said detecting means (9, 10) mounted on said first part (3) and/or on said second part (5) to determine an absolute angular position of the respective plurality of said detecting means (9, 10) with respect to said disk (7).

2. Device (1) for angular measures according to claim 1, **characterised in that** each one of said detecting means (9, 10), next to a passage of said references, is adapted to generate respective electronic signals ($s_9$, $s_{10}$).

3. Device (1) for angular measures according to claim 1, **characterised in that** it comprises control means (11) adapted to measure a phase or a time interval between said signals ($s_9$, $s_{10}$), each one of said signals ($s_9$, $s_{10}$) coming from a respective one of said detecting means (9, 10).

4. Device (1) for angular measures according to claim 3, **characterised in that** said control means (11) comprise means for measuring a phase and/or means for measuring a time delay and/or self-correlation detecting means.

5. Device (1) for angular measures according to claim 3, **characterised in that** said control means (11) comprise at least one 16-bit analogue/digital converter (15) and a software (17) of the "labview" type, namely a software (15) that has been made for a heterodyne interferometer, and is adapted to perform a phase measuring and to convert this measure into an angle measure.

6. Device (1) for angular measures according to claim 1, **characterised in that** said rotary member (7) is at least one rotary disk on which said references are imprinted as signs and each one of said detecting means (9) is at least one optical sensor.

7. Device (1) for angular measures according to claim 1, **characterised in that** said rotary member (7) is at least one disk or drum magnetised along a circumference thereof, said references are alternate magnetic poles and said detecting means (9, 10) are magnetic sensors adapted to detect said poles.

8. Device (1) for angular measures according to claim 1, **characterised in that** said rotary member (7) is a glass disk, said references are opaque signs printed or made as photographic emulsion and said detecting means (9, 10) are transmission-type detectors.

9. Device (1) for angular measures according to claim 1, **characterised in that** said rotary member (7) is a glass disk, said references are metallic signs and said detecting means (9, 10) are transmission- or reflection-type detectors.

10. Device (1) for angular measures according to claim 1, **characterised in that** said rotary member (7) is a metallic disk or drum, said references are signs made of materials with different reflectivity and said detecting means (9, 10) are reflection-type detectors.

11. Device (1) for angular measures according to claim 1, **characterised in that** said rotary member (7) is a plastic or metallic disk, said references are openings and said detecting means (9, 10) are transmission-type detectors.

12. Device (1) for angular measures according to any one of claims 7 to 11, **characterised in that** said detecting means (9, 10) are adapted to use a "Moirè" technique, namely a technique in which a transmission grating is used with a similar pitch to the one of disk signs, so that the detector "sees" many signs simultaneously.

13. Device (1) for angular measures according to claim 1, **characterised in that** said rotary member (7) is an optical disk exploiting the interference between two laser beams diffracted by grooves on said optical disk operating as diffraction grating.

**14.** Device (1) for angular measures according to claim 1, **characterised in that** said plurality of signs comprise twelve series of signs coded with "Gray" coding.

**Patentansprüche**

**1.** Vorrichtung (1) für Winkelmessungen, die aus einem ersten Teil (3) und einem zweiten Teil (5) besteht, jeder dieser Teile (3, 5) kann sich im Verhältnis zum anderen um eine Drehachse (R-R) drehen, zwischen den genannten Teilen (3, 5) befindet sich mindestens ein Drehelement (7), das fortlaufend durch Antriebsvorrichtungen (14) um die genannte Achse (R-R) gedreht wird, jeder der genannten Teile (3, 5) ist mit mindestens einer entsprechenden Aufnahmevorrichtung (9, 10) ausgestattet, und das genannte Element (7) ist mit Bezügen ausgestattet, die dazu dienen, selbstständig von jeder der genannten Aufnahmevorrichtungen (9, 10) erfasst zu werden, und ist **dadurch gekennzeichnet, dass** das genannte Drehelement (7) eine Scheibe ist, in der die genannten Bezüge mehrere Abschnitte sind, die durch mehrere genannte Aufnahmevorrichtungen (9, 10) erfasst werden, die am genannten ersten Teil (3) und/oder am genannten zweiten Teil (5) montiert sind, um eine absolute Winkelposition der entsprechenden mehreren Aufnahmevorrichtungen (9, 10) gegenüber der genannten Scheibe (7) zu bestimmen.

**2.** Vorrichtung (1) für Winkelmessungen gemäß Patentanspruch 1, die **dadurch gekennzeichnet ist, dass** jede der genannten Aufnahmevorrichtungen (9, 10) an einem Übergang der genannten Bezüge dazu dient, entsprechende elektronische Signale zu erzeugen ($s_9$, $s_{10}$).

**3.** Vorrichtung (1) für Winkelmessungen gemäß Patentanspruch 1, die **dadurch gekennzeichnet ist, dass** sie Kontrollvorrichtungen (11) einschließt, die dazu dienen, eine Phase oder einen Zeitintervall zwischen den genannten Signalen ($s_9$, $s_{10}$) zu messen, jedes der genannten Signale ($s_9$, $s_{10}$) kommt von einer der genannten Aufnahmevorrichtungen (9, 10).

**4.** Vorrichtung (1) für Winkelmessungen gemäß Patentanspruch 3, die **dadurch gekennzeichnet ist, dass** die genannten Kontrollvorrichtungen (11) Phasenmessvorrichtungen und/oder Messvorrichtungen der Zeitverzögerung und/oder Autokorrelations-Detektorvorrichtungen einschließen.

**5.** Vorrichtung (1) für Winkelmessungen gemäß Patentanspruch 3, die **dadurch gekennzeichnet ist,**

**dass** die genannten Kontrollvorrichtungen (11) mindestens einen 16-Bit-Analog-/Digitalwandler (15) und eine Software "labview" (17) einschließen, d. h. eine Software (15), die für ein Heterodyn-Interferometer realisiert wurde und dazu dient, eine Phasenmessung auszuführen und diese Messung in eine Winkelmessung zu konvertieren.

**6.** Vorrichtung (1) für Winkelmessungen gemäß Patentanspruch 1, die **dadurch gekennzeichnet ist, dass** das genannte Drehelement (7) mindestens eine Drehscheibe ist, auf der die genannten Bezüge als Abschnitte aufgedruckt sind, und jede der genannten Aufnahmevorrichtungen (9) mindestens ein Optiksensor ist.

**7.** Vorrichtung (1) für Winkelmessungen gemäß Patentanspruch 1, die **dadurch gekennzeichnet ist, dass** das genannte Drehelement (7) mindestens eine Magnetscheibe oder -trommel längs eines ihrer Kreisumfänge ist, die genannten Bezüge abwechselnde Magnetpole sind, und die genannten Aufnahmevorrichtungen (9, 10) Magnetsensoren sind, die dazu dienen, die genannten Pole zu aufzunehmen.

**8.** Vorrichtung (1) für Winkelmessungen gemäß Patentanspruch 1, die **dadurch gekennzeichnet ist, dass** das genannte Drehelement (7) eine Glasscheibe ist, die genannten Bezüge gedruckte matte Abschnitte oder aus Fotoemulsion ausgeführt sind, und die genannten Aufnahmevorrichtungen (9, 10) Übertragungsdetektoren sind.

**9.** Vorrichtung (1) für Winkelmessungen gemäß Patentanspruch 1, die **dadurch gekennzeichnet ist, dass** das genannte Drehelement (7) eine Glasscheibe ist, die genannten Bezüge Abschnitte aus Metall sind, und die genannten Aufnahmevorrichtungen (9, 10) Übertragungs- oder Reflexionsdetektoren sind.

**10.** Vorrichtung (1) für Winkelmessungen gemäß Patentanspruch 1, die **dadurch gekennzeichnet ist, dass** das genannte Drehelement (7) eine Scheibe oder Trommel aus Metall ist, die genannten Bezüge Abschnitte aus Material mit unterschiedlicher Reflektivität sind, und die genannten Aufnahmevorrichtungen (9, 10) Reflexionsdetektoren sind.

**11.** Vorrichtung (1) für Winkelmessungen gemäß Patentanspruch 1, die **dadurch gekennzeichnet ist, dass** das genannte Drehelement (7) eine Scheibe aus Kunststoff oder Metall ist, die genannten Bezüge Öffnungen sind, und die genannten Aufnahmevorrichtungen (9, 10) Übertragungsdetektoren sind.

**12.** Vorrichtung (1) für Winkelmessungen gemäß einem beliebigen der Patentansprüche von 7 bis 11, die **dadurch gekennzeichnet ist, dass** die genannten Aufnahmevorrichtungen (9, 10) dazu dienen, eine "Moire-Technik" zu verwenden, d. h. eine Technik, in der ein Übertragungsnetz mit einem ähnlichen Abstand wie die Abschnitte der Scheibe verwendet wird, damit der Detektor mehrere Abschnitte gleichzeitig "sieht".

13. Vorrichtung (1) für Winkelmessungen gemäß Patentanspruch 1, die **dadurch gekennzeichnet ist, dass** das genannte Drehelement (7) eine Optikscheibe ist, die die Interferenz zwischen zwei gebeugten Laserstrahlen als Rillen auf der genannten Optikscheibe nutzt, die als Beugungsnetz wirkt.

14. Vorrichtung (1) für Winkelmessungen gemäß Patentanspruch 1, die **dadurch gekennzeichnet ist, dass** die genannten mehreren Abschnitte zwölf Reihen codierter Abschnitte mit "Gray-Codierung" einschließen.

## Revendications

1. Dispositif (1) pour mesures angulaires composé d'une première partie (3) et d'une seconde partie (5) qui sont en mesure de tourner relativement l'une par rapport à l'autre autour d'un axe de rotation (R-R) ; entre ces parties (3, 5), est interposé un élément tournant (7) placé en rotation continue autour de l'axe (R-R) à travers des actionneurs (14) ; chaque partie (3, 5) est dotée au moins d'un moyen de détection relatif (9, 10) et l'élément (7) est doté de référence aptes à être relevées de manière autonome par chaque moyen de détection (9, 10), **caractérisé en ce que** l'élément tournant (7) est un disque où les références sont une pluralité de morceaux relevés par une pluralité de moyens de détection (9, 10) montés sur la première partie (3) et/ou sur la seconde partie (5) pour déterminer une position angulaire absolue de la pluralité respective des moyens de détection (9, 10) par rapport au disque (7).

2. Dispositif (1) pour mesures angulaires, selon la revendication 1, **caractérisé en ce que** chaque moyen de détection (9, 10), au niveau du passage des références, est apte à engendrer des signaux électroniques relatifs ($s_9$, $s_{10}$).

3. Dispositif (1) pour mesures angulaires, selon la revendication 1, **caractérisé en ce qu'**il comprend des moyens de contrôle (11) aptes à mesurer une phase ou un intervalle de temps entre les signaux ($s_9$, $s_{10}$), où chaque signal ($s_9$, $s_{10}$) provient des moyens de détection relatifs (9, 10).

4. Dispositif (1) pour mesures angulaires, selon la revendication 3, **caractérisé en ce que** les moyens de contrôle (11) comprennent des moyens de mesure de phase et/ou des moyens de mesure du retard et/ou des moyens de détection de l'auto-corrélation.

5. Dispositif (1) pour mesures angulaires, selon la revendication 3, **caractérisé en ce que** les moyens de contrôle (11) comprennent au moins un convertisseur analogique/numérique à 16 bits (15) et un logiciel de type "labview" (17), à savoir un logiciel (15) qui a été réalisé pour un interféromètre hétérodyne et qui est apte à exécuter une mesure de phase et à la convertir en une mesure d'angle.

6. Dispositif (1) pour mesures angulaires, selon la revendication 1, **caractérisé en ce que** l'élément tournant (7) est au moins un disque tournant sur lequel des encoches sont gravées en guise de référence tandis que chaque moyen de détection (9) est au moins un capteur optique.

7. Dispositif (1) pour mesures angulaires, selon la revendication 1, **caractérisé en ce que** l'élément tournant (7) est au moins un disque ou un tambour magnétisé le long d'une circonférence ; les références sont des pôles magnétiques alternés tandis que les moyens de détection (9, 10) sont des capteurs magnétiques aptes à relever les pôles.

8. Dispositif (1) pour mesures angulaires, selon la revendication 1, **caractérisé en ce que** l'élément tournant (7) est un disque en verre ; les références sont des morceaux opaques imprimés ou réalisés par émulsion photographique tandis que les moyens de détection (9, 10) sont des détecteurs en transmission.

9. Dispositif (1) pour mesures angulaires, selon la revendication 1, **caractérisé en ce que** l'élément tournant (7) est un disque en verre ; les références sont des morceaux en métal tandis que les moyens de détection (9, 10) sont des détecteurs en transmission ou en réflexion.

10. Dispositif (1) pour mesures angulaires, selon la revendication 1, **caractérisé en ce que** l'élément tournant (7) est un disque ou un tambour en métal ; les références sont des morceaux de matériau ayant différentes réflectivités tandis que les moyens de détection (9, 10) sont des détecteurs en réflexion.

11. Dispositif (1) pour mesures angulaires, selon la revendication 1, **caractérisé en ce que** l'élément tournant (7) est un disque en plastique ou en métal ; les références sont des ouvertures tandis que les moyens de détection (9, 10) sont des détecteurs en transmission.

12. Dispositif (1) pour mesures angulaires selon l'une des revendications de 7 à 11, **caractérisé en ce que** les moyens de détection (9, 10) sont aptes à utiliser une technique "Moiré", c'est-à-dire une technique où l'on utilise une grille de transmission dont le pas est semblable à celui des morceaux du disque pour faire en sorte que le détecteur "voit" plusieurs morceaux simultanément.

13. Dispositif (1) pour mesures angulaires, selon la revendication 1, caractérisé en ce l'élément tournant (7) est un disque optique qui exploite l'interférence entre deux faisceaux laser diffractés par des sillons sur le disque optique agissant comme grille de déchiffrage.

14. Dispositif (1) pour mesures angulaires, selon la revendication 1, **caractérisé en ce que** la pluralité de morceaux comprend douze séries de morceaux codés avec le code de "Gray".

FIG. 1

FIG. 2

FIG. 3

FIG. 4

**EP 2 534 451 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT CA20090002 A

- GB 1453728 A